(19) **Europäisches Patentamt**
**European Patent Office**
**Office européen des brevets**

(11) **EP 4 531 129 A1**

(12) **EUROPEAN PATENT APPLICATION**
published in accordance with Art. 153(4) EPC

(43) Date of publication:
**02.04.2025 Bulletin 2025/14**

(21) Application number: **23896555.2**

(22) Date of filing: **17.11.2023**

(51) International Patent Classification (IPC):
**H01M 4/13** (2010.01)  **H01M 4/139** (2010.01)
**H01M 10/0525** (2010.01)

(52) Cooperative Patent Classification (CPC):
**Y02E 60/10**

(86) International application number:
**PCT/CN2023/132181**

(87) International publication number:
**WO 2024/114403 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.11.2022  CN 202211504705**

(71) Applicant: **BatteroTech Co., Ltd**
**Jiaxing, Zhejiang 314100 (CN)**

(72) Inventors:
• **REN, Ruili**
  **Shanghai 201417 (CN)**
• **CHEN, Wenjia**
  **Shanghai 201417 (CN)**

(74) Representative: **Novagraaf Technologies**
**Bâtiment O2**
**2, rue Sarah Bernhardt**
**CS90017**
**92665 Asnières-sur-Seine Cedex (FR)**

(54) **POSITIVE ELECTRODE PLATE FOR BATTERY, AND BATTERY, APPARATUS AND PREPARATION METHOD**

(57)    Provided are a positive electrode plate for a battery, a battery, a device, and a manufacturing method. The positive electrode plate for a battery includes a positive electrode material layer containing a positive electrode material, where the positive electrode material includes a first component and a second component. Thermal stability of the first component is lower than that of the second component, the positive electrode material satisfies: $\tau$ = T1 * (8 - lgCap)/(2256 * w), w is a mass ratio of the first component to the positive electrode material layer, T1 is a temperature of the first component at an exothermic peak in a differential scanning calorimetry characterization, Cap is a capacity of the battery, a unit of Cap is A h, $\tau$ is a characteristic ratio of the positive electrode material, and $0.8 \leq \tau \leq 1.5$. According to examples in the disclosure, by blending the second component with higher thermal stability in the first component with lower thermal stability, the positive electrode plate can have high energy density and improved thermal stability, so as to have high safety performance.

<u>01</u>

Fig. 1

**EP 4 531 129 A1**

## Description

The present application claims the right of priority to Chinese patent application No. 202211504705.8, filed on November 28, 2022, and the disclosed content of the above-mentioned Chinese patent application is incorporated herein by reference in its entirety as part or in whole of the present application.

## Technical Field

Examples of the disclosure relates to a positive electrode plate for a battery, a battery, a device, and a manufacturing method.

## Background

With the advantages of high energy density, high working voltage, light weight, small size, green and environmental protection etc, lithium-ion batteries are widely used in various fields. positive electrode current collectors, as an important component of the lithium-ion batteries, serve to transport electrons, allow attachment of positive electrode active substances, and provide a certain mechanical strength for the positive electrode plates. Conventional positive electrode collectors are mainly manufactured by casting and rolling, cold rolling, and foil rolling aluminum alloy materials.

## Summary

At least one example of the disclosure relates to a positive electrode plate for a battery, a battery including the positive electrode plate, a device including the battery, and a manufacturing method for the positive electrode plate of a battery, such that the positive electrode plate has high energy density and improved thermal stability, so as to have high safety performance.

At least one example of the disclosure provides a positive electrode plate for a battery. The positive electrode plate includes a positive electrode material layer containing a positive electrode material. The positive electrode material includes a first component and a second component. Thermal stability of the first component is lower than that of the second component, and energy density of the first component is greater than that of the second component. The positive electrode material satisfies: $\tau = T1 * (8 - \lg Cap)/(2256 * w)$, w is a mass ratio of the first component to the positive electrode material layer, T1 is a temperature of the first component at an exothermic peak in a differential scanning calorimetry characterization, a unit of T1 is °C, Cap is a capacity of the battery, a unit of Cap is A h, $\tau$ is a characteristic ratio of the positive electrode material, and $0.8 \leq \tau \leq 1.5$.

For example, in the positive electrode plate for a battery provided in at least one example of the disclosure, $0.85 \leq \tau \leq 1.2$.

For example, in the positive electrode plate for a battery provided in at least one example of the disclosure, $0.9 \leq \tau \leq 1.1$.

For example, in the positive electrode plate for a battery provided in at least one example of the disclosure, the temperature of the first component at the exothermic peak in the differential scanning calorimetry characterization is less than or equal to 306°C, and a temperature of the second component at an exothermic peak in the differential scanning calorimetry characterization is greater than 306°C.

For example, in the positive electrode plate for a battery provided in at least one example of the disclosure, a gram capacity of the first component is greater than or equal to 150 mA h/g, and a gram capacity of the second component is less than 150 mA h/g.

For example, in the positive electrode plate for a battery provided in at least one example of the disclosure, the first component includes at least one of a ternary material, lithium cobaltate, lithium nickelate, the second component includes at least one of an olivine material, a spinel material and a ternary layered compound with a low nickel content, and a mass percentage of nickel in the ternary layered compound with a low nickel content is 30%-80%.

For example, in the positive electrode plate for a battery provided in at least one example of the disclosure, the olivine material includes at least one of lithium iron phosphate, lithium iron manganese phosphate, lithium vanadium phosphate, and lithium manganate.

For example, the positive electrode plate for a battery provided in at least one example of the disclosure further includes a positive electrode current collector, where at least one side of the positive electrode current collector is provided with the positive electrode material layer.

For example, in the positive electrode plate for a battery provided in at least one example of the disclosure, the positive electrode current collector is a composite current collector, the positive electrode current collector has a first resistance R1, and the first resistance R1 satisfies: $20\ \text{m}\Omega \leq R1 \leq 100\ \text{m}\Omega$.

For example, the positive electrode plate for a battery provided in at least one example of the disclosure further includes a coating, where the coating is located between the positive electrode material layer and the positive electrode current collector, and the coating has a second resistance R2, where the second resistance R2 satisfies: 20 m$\Omega$ $\leq$ R2 $\leq$ 1000 m$\Omega$, and a thickness H of the coating satisfies: 0.5 $\mu$m $\leq$ H $\leq$ 5 $\mu$m.

For example, in the positive electrode plate for a battery provided in at least one example of the disclosure, the thickness H of the coating satisfies: 1 $\mu$m $\leq$ H $\leq$ 3 $\mu$m.

For example, in the positive electrode plate for a battery provided in at least one example of the disclosure, the second resistance R2 of the coating satisfies: 10 m$\Omega$ $\leq$ R2 $\leq$ 300 m$\Omega$.

For example, in the positive electrode plate for a battery provided in at least one example of the disclosure, the coating material includes an inorganic material, a conductive agent, and a binder, where the inorganic material includes at least one of lithium iron phosphate, lithium iron manganese phosphate, lithium vanadium phosphate, lithium vanadyl phosphate, a lithium-rich manganese base material, lithium nickel cobalt aluminate and lithium titanate; the conductive agent includes at least one of carbon black, carbon fiber, carbon nanotubes, graphite, graphene, metal powder, a conductive polymer and conductive ceramic powder; and the binder includes at least one of polyvinylidene fluoride, a vinylidene fluoride-hexafluoropropylene copolymer, polyamide, polyacrylonitrile, polyacrylic ester, polyacrylic acid, polyacrylate, sodium carboxymethyl cellulose and lithium carboxymethyl cellulose.

For example, in the positive electrode plate for a battery provided in at least one example of the disclosure, a capacity of the battery is greater than 10 A h.

For example, in the positive electrode plate for a battery provided in at least one example of the disclosure, a capacity of the battery is greater than or equal to 100 A h.

For example, in the positive electrode plate for a battery provided in at least one example of the disclosure, the capacity of the battery is greater than or equal to 100A h and less than or equal to 115A h.

At least one example of the disclosure further provides a battery. The battery includes the positive electrode plate according to any one of the above items.

At least one example of the disclosure further provides a device. The device further includes the battery. The battery is configured to serve as a power source of the device.

At least one example of the disclosure further provides a manufacturing method for a positive electrode plate of a battery. The manufacturing method includes: forming a positive electrode material layer containing a positive electrode material, where the forming a positive electrode material layer containing a positive electrode material includes: blending a second component in a first component to prepare the positive electrode material, where thermal stability of the first component is lower than that of the second component, the positive electrode material satisfies: $\tau$ = T1 * (8 - lgCap)/(2256 * w), w is a mass ratio of the first component to the positive electrode material layer, T1 is a temperature of the first component at an exothermic peak in a differential scanning calorimetry characterization, a unit of T1 is °C, Cap is a capacity of the battery, a unit of Cap is A h, $\tau$ is a characteristic ratio of the positive electrode material, and 0.8 $\leq$ $\tau$ $\leq$ 1.5.

For example, according to the manufacturing method provided in at least one example of the disclosure, 0.85 $\leq$ $\tau$ $\leq$ 1.2.

For example, according to the manufacturing method provided in at least one example of the disclosure, 0.9 $\leq$ $\tau$ $\leq$ 1.1.

For example, according to the manufacturing method provided in at least one example of the disclosure, the temperature of the first component at the exothermic peak in the differential scanning calorimetry characterization is less than or equal to 306°C, and a temperature of the second component at an exothermic peak in the differential scanning calorimetry characterization is greater than 306°C.

For example, according to the manufacturing method provided in at least one example of the disclosure, a gram capacity of the first component is greater than or equal to 150 mA h/g, and a gram capacity of the second component is less than 150 mA h/g.

## Brief Description of the Drawings

In order to explain the technical solutions in examples of the disclosure more clearly, the accompanying drawings required in the description of the examples will be described below briefly. Apparently, the accompanying drawings in the following description merely relates to some examples of the disclosure, and are not limiting of the disclosure.

Fig. 1 is a schematic structural diagram of a positive electrode plate according to an example of the disclosure; and

Fig. 2 is a schematic structural diagram of another positive electrode plate according to an example of the disclosure.

## Detailed Description of the Embodiments

In order to make the objectives, technical solutions, and advantages in the examples of the disclosure clearer, the technical solutions in the examples of the disclosure will be clearly and completely described below in conjunction with the accompanying drawings in the examples of the disclosure. It is obvious that the described examples are some examples rather than all examples of the disclosure. Based on the described examples of the disclosure, all other examples acquired by those skilled in the art without making creative efforts fall within the scope of protection of the disclosure.

Unless otherwise defined, technical or scientific terms used in the disclosure should have ordinary meaning as understood by those of ordinary skill in the art to which the disclosure belongs. "First", "second", and similar words used in the disclosure does not denote any order, number, or importance, but are merely used to distinguish different components. Similarly, "comprise", "include" and similar words are intended to mean that an element or item in front of the word encompasses elements or items that are listed behind the word and their equivalents, but do not exclude other elements or items. "Connection", "connected" and similar words are not limited to a physical or mechanical connection, but can include a direct or indirect electrical connection. "Upper", "lower", "left", "right", etc. are merely used to indicate a relative position relation, which may also change accordingly when an absolute position of a described object changes.

At present, mechanical abuse can lead to short circuits in lithium ion batteries, and such a short circuit may lead to thermal runaway of the lithium ion batteries, which leads to safety problems in the lithium ion batteries. In order to improve mechanical abuse resistance of the lithium ion batteries, a variety of technical means can be used. However, although these technical means improve the safety performance of the lithium ion batteries, they may have a greater influence on volumetric energy density of the lithium ion batteries. Therefore, while safety of the lithium ion batteries is improved, increasing energy density of the batteries has become an urgent problem to be solved.

For example, in a lithium ion battery, a ternary material have high energy density as a common material. As a nickel content increases, a gram capacity of the ternary material increases, such that the energy density of the lithium ion battery can further increase. However, as the nickel content increases, thermal stability of a positive electrode material of the lithium ion battery decreases, such that heat generation, oxygen evolution, etc. may occur at a lower temperature, resulting in lower safety of a cell in the lithium ion battery. Therefore, thermal runaway is likely to occur when the lithium ion battery is subjected to mechanical abuse tests such as puncture.

For example, in order to improve the safety of a ternary lithium ion battery, using a composite current in some technologies. Using a polymer layer as a support layer in the composite current collector, metal is compounded on two sides of the polymer layer by bonding, evaporation, etc. to form conductive layers, and a "sandwich" structure of metal layer-polymer layer-metal layer is formed. When the ternary lithium ion battery is mechanically abused, since the conductive layer is thinner than a conductive layer of a conventional metal current collector, and higher a resistance, lowershort-circuit current, less heat generation, lower temperature rise, such that probability of thermal runaway of the battery is reduced.

For example, in order to improve the safety of the ternary lithium ion battery, using a solution of coating a surface of the positive electrode current collector with a safety coating and then a positive electrode material in some technologies. For example, when the battery is mechanically abused, there will be four internal short circuits of positive electrode current collector-negative electrode current collector, positive electrode current collector-negative electrode, positive electrode-negative electrode current collector and positive electrode-negative electrode, and the positive electrode current collector-negative electrode is the most dangerous internal short circuit mode, which is likely to cause thermal runaway of the battery. Arrangement of the safety coating can protect the surface of the positive electrode current collector, increase a resistance between the positive electrode current collector and the negative electrode, reduce a current and heat generation when the positive electrode current collector and the negative electrode are internally short-circuited, reduce the temperature rise, and further avoid thermal runaway of the battery.

However, the above-mentioned ways to improve the safety of the ternary lithium ion battery are mostly applied to a battery with a smaller capacity (for example, a battery with a capacity less than 10 A·h). When the battery capacity increases, an internal resistance of the battery decreases, such that when the internal short circuit occurs, higher short-circuit currents, produce more heat, and the temperature at the short-circuit point rises rapidly. In this case, even if the composite current collector is applied, It will also reach a thermal runaway temperature at the ternary material before the support layer completely shrinks, which will cause thermal runaway of the battery. Alternatively, even if the safety coating technology is applied, the temperature at the short circuit point also rises above the thermal runaway temperature of the ternary material, which will cause thermal runaway of the battery.

Since the capacity of lithium ion batteries currently applied to power or energy storage is above 10 A·h (for example, most of them are around 100 A·h), the above technology cannot solve the safety problem of power and energy storage batteries when mechanical abuse occurs.

At least one example of the disclosure provides a positive electrode plate for a battery, a battery, a device, and a manufacturing method. The positive electrode plate for a battery includes a positive electrode material layer containing a positive electrode material. The positive electrode material includes a first component and a second component. Thermal stability of the first component is lower than that of the second component. The positive electrode material satisfies: $\tau = T1 * (8 - \lg Cap)/(2256 * w)$, where $w$ is a mass ratio of the first component to the positive electrode material layer, $T1$ is a temperature of the first component at an exothermic peak in a differential scanning calorimetry characterization, a unit of T1 is °C, Cap is a capacity of the battery, a unit of Cap is A h, $\tau$ is a characteristic ratio of the positive electrode material, and $0.8 \le \tau \le 1.5$.

According to examples in the disclosure, by blending the second component with higher thermal stability in the first component with lower thermal stability, the positive electrode can have high energy density and improved thermal stability, so as to have high safety performance.

The positive electrode plate for a battery, the battery including the positive electrode plate, the device including the battery, and the manufacturing method for the positive electrode plate are described below by means of some examples in conjunction with the accompanying drawings.

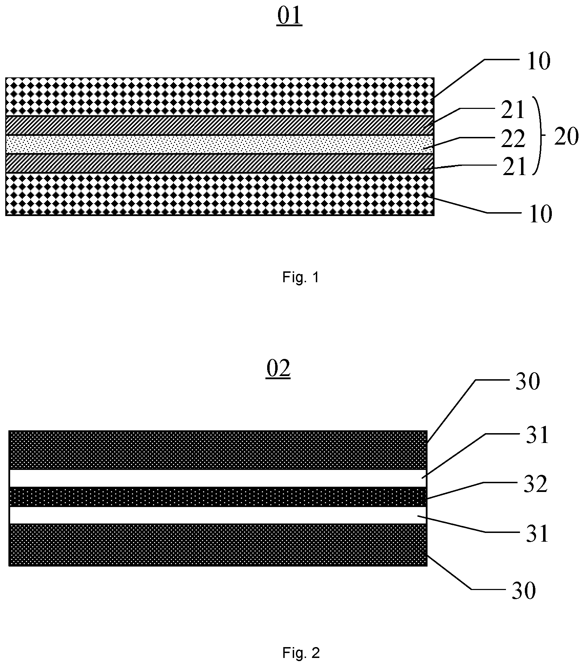

Fig. 1 is a schematic structural diagram of a positive electrode plate according to an example of the disclosure.

With reference to Fig. 1, at least one example of the disclosure provides a positive electrode plate 01. The positive electrode plate is provided with a positive electrode material layer 10 containing a positive electrode material. The positive electrode material includes a first component and a second component. Thermal stability of the first component is lower than that of the second component. The positive electrode material satisfies the following formula:

$$\tau = T1 * (8 - lgCap)/(2256 * w)$$

$\tau$ represents a characteristic ratio of the positive electrode material; w represents a mass ratio of the first component to the positive electrode material layer; T1 represents a temperature of the first component at an exothermic peak in a differential scanning calorimetry characterization, and a unit of T1 is °C; and Cap represents a capacity of the battery, and a unit of Cap is A h.

In the positive electrode material, $0.8 \le \tau \le 1.5$.

For example, the positive electrode plate 01 may be used for a storage battery. For example, the positive electrode plate may be used for a lithium ion battery, which is not limited thereto, which is not limited in the examples of the disclosure. For example, the first component and the second component may be positive electrode active materials.

In at least one example of the disclosure, by dividing the positive electrode active material of the positive electrode material layer in the positive electrode plate into two components, complexity can be simplified, and classification and selection from a plurality of positive electrode active materials are facilitated.

In the positive electrode material layer 10, by reasonably selecting the first component and the second component, the first component with lower thermal stability is mixed with the second component with higher thermal stability, such that the occurrence of heat generation, oxygen release, etc. of the battery and the probability of thermal runaway when the battery is mechanically abused can be reduced. Moreover, the positive electrode material can be applied to scenes with larger electric capacity requirements. For example, the positive electrode material can be applied to lithium ion batteries with a capacity greater than 10 A·h for power or energy storage, to satisfy larger battery capacity requirements. Further, for example, the positive electrode material can be applied to lithium ion batteries with a capacity greater than or equal to 100 A·h for power or energy storage.

For example, in the example of the disclosure, the capacity of the battery is greater than or equal to 100A h and less than or equal to 115 A h. For example, the positive electrode material can be applied to lithium ion batteries with a capacity of 50 A·h-200 A h for power or energy storage. For example, the positive electrode material can be applied to lithium ion batteries with a capacity of 100 A·h-160 A h for power or energy storage. The positive electrode material can be applied to lithium ion batteries with a capacity of 120 A·h-140 A·h for power or energy storage, which is not limited thereto.

Therefore, the positive electrode plate 01 provided in at least one example of the disclosure can allow the battery to have high safety performance and satisfy large capacity requirements, such that the battery has great application potential.

As for the positive electrode plate provided in the example of the disclosure, in order to obtain a battery with a larger capacity and reduce the probability of thermal runaway when the battery is mechanically abused, the positive electrode material is divided into two components, that is, a first component and a second component. The two components of the positive electrode material have their own advantages in terms of thermal stability and energy density. A formula is established by means of the characteristic ratio $\tau$, the capacity of the battery Cap, the temperature T1 of the first component at the exothermic peak in the differential scanning calorimetry characterization and the mass ratio w of the first component to the positive electrode material layer, and the component and content satisfying the characteristic ratio $\tau$ in the formula are the positive electrode plate satisfying the requirements. The examples of the disclosure provides a suitable positive electrode plate for obtaining a battery with a large capacity and reducing the probability of thermal runaway when the battery is mechanically abused. In the formula, all parameters are linked, and a positive electrode material satisfying $0.8 \le \tau \le 1.5$ is the positive electrode plate satisfying requirements.

For example, in some examples of the disclosure, in a case that the capacity of the battery is determined, the positive electrode material satisfies: $0.85 \le \tau \le 1.2$ by adjusting the capacity of the battery, and the components and content of the positive electrode material. Therefore, the battery using the positive electrode material may have desirable safety performance and a large capacity.

For example, in some examples of the disclosure, in a case that the capacity of the battery is determined, the positive electrode material satisfies: $0.9 \leq \tau \leq 1.1$ by adjusting the capacity of the battery, the components of the positive electrode material, and the contents of the components, for a better balance of safety performance and access to high-capacity batteries. Therefore, the battery using the positive electrode material may have better safety performance and a larger capacity.

For example, with reference to Fig. 1, as for the positive electrode material in the positive electrode plate 01 of the battery, the temperature of the first component at the exothermic peak in the differential scanning calorimetry characterization is less than or equal to 306°C, and a temperature of the second component at an exothermic peak in the differential scanning calorimetry characterization is greater than 306°C. By taking the exothermic peak temperature of 306°C as a boundary in the differential scanning calorimetry characterization, the two components in the positive electrode material can be distinguished, such that selection and content obtaining of the components of the positive electrode material can be conveniently implemented.

For example, in a case that the components of the positive electrode active material is determined, the temperature of the component at the exothermic peak in the differential scanning calorimetry characterization is determined. That is, the temperature at the exothermic peak in the differential scanning calorimetry characterization is a component-dependent parameter, which is a constant value in a case that the component is determined.

For example, in the example of the disclosure, the temperature at the exothermic peak in the differential scanning calorimetry characterization is obtained by using a general differential scanning calorimeter, and a corresponding national standard (GB) is JB/T 6856-2017. A model of the differential scanning calorimeter used in the example of the disclosure is METTLER TOLEDO DSC 3+. Certainly, other differential scanning calorimeters can also be used for measurement.

For example, the thermal stability of the first component is lower than that of the second component, and the first component produces a higher thermal effect per unit time than the second component produces per unit time.

For example, the temperature of the first component at the exothermic peak in the differential scanning calorimetry characterization may be fall within 100°C-306°C, which is not limited thereto. For example, a boundary of the temperature of the first component and the second component at the exothermic peak is 306°C, which is not limited thereto. Thus, by blending the second component with the first component, the thermal stability of the positive electrode material of the positive electrode plate 01 can be improved, such that the battery has high safety.

For example, with reference to Fig. 1, as for the positive electrode material of the positive electrode plate 01 of the battery, a gram capacity of the first component is greater than or equal to 150 mA h/g, and a gram capacity of the second component is less than 150 mA h/g. By further limiting a gram capacity of the positive electrode active material component and further screening the positive electrode active material, the boundary between the first component and the second component is made clearer.

The gram capacity of the active component in the positive electrode material is related to the component. In a case that the component is determined, the gram capacity of the component is determined. The gram capacity is measured by using usual test conditions. In the example of the disclosure, a measurement standard of the gram capacity refers to GB/T 23365-2009.

For example, in the positive electrode material of the positive electrode plate 01, the energy density of the first component is greater than that of the second component. A boundary of the gram capacity of the first component and the second component is 150 mA h/g, which is not limited thereto. Thus, by blending the first component with the second component, the entire energy density of the positive electrode material of the positive electrode plate 01 can be improved, such that the battery has high energy density.

For example, in some examples, the temperature of the first component at the exothermic peak in the differential scanning calorimetry characterization is less than or equal to 306°C, and a temperature of the second component at an exothermic peak in the differential scanning calorimetry characterization is greater than 306°C. The gram capacity of the first component is greater than or equal to 150 mA h/g, and the gram capacity of the second component is less than 150 mA h/g. The positive electrode active material is further screened by taking the exothermic peak temperature of 306°C as a boundary in the differential scanning calorimetry characterization and the component gram capacity of 150 mA·h/g as the boundary, and the positive electrode active material satisfying these conditions are more conducive to balance in safety performance and obtaining of a battery with a large capacity.

In the examples of the disclosure, the energy density of a battery refers to a ratio of the energy to a volume of the battery.

For example, with reference to Fig. 1, in the positive electrode plate 01, the first component may include at least one of a ternary material, lithium cobaltate, lithium nickelate. The second component may include at least one of an olivine material, a spinel material and a ternary layered compound with a low nickel content. A mass percentage of nickel in the ternary layered compound with a low nickel content is 30%-80%, which is not limited thereto. For example, the mass percentage of nickel in the ternary layered compound with a low nickel content may be 30%-50%. For example, the mass percentage of nickel in the ternary layered compound with a low nickel content may be 40%-60%. For example, the mass percentage of nickel in the ternary layered compound with a low nickel content may be 44%-55%.

For example, with reference to Fig. 1, in the positive electrode plate 01, the olivine material may include at least one of lithium iron phosphate, lithium iron manganese phosphate, lithium vanadium phosphate, and lithium manganate, which is not limited thereto.

In the positive electrode plate 01, by reasonably selecting the first component and the second component as the above material in a specific ratio, the battery can have high safety performance and further satisfy large capacity requirements.

For example, with reference to Fig. 1, the positive electrode plate 01 further includes a positive electrode current collector 20. At least one side of the positive electrode current collector 20 is provided with the positive electrode material layer 10. The positive electrode current collector 20 has a first resistance R1.

For example, with reference to Fig. 1, the positive electrode current collector 20 may be a composite current collector and include a support layer 22, and conductive layers 21 arranged on two sides of the support layer 22. For example, the support layer 22 may includes a polymer, which is not limited thereto. For example, the support layer 22 includes an insulating material. For example, the insulating material may include at least one of PET (polyethylene terephthalate), PE (polyethylene), PVC (polyvinyl chloride ), PP (polypropylene ), a BOPP(biaxially oriented polypropylene film ), an OPS (oriented polystyrene film ), and POF (polyolefin), which is not limited thereto.

For example, the positive electrode material layer 10 may be located only on one side of the positive electrode current collector 20, that is, only one positive electrode material layer 10 is arranged in the positive electrode plate 01. For example, two positive electrode material layers 10 may be located on two opposite sides of the positive electrode current collector 20, that is, two positive electrode material layers 10 are arranged in the positive electrode plate 01, which is not limited thereto.

The positive electrode current collector 20 including the support layer 22 is arranged in the positive electrode plate 01, since the thickness of the conductive layer 21 in the positive electrode collector 20 is thinner and more resistive than that of the conventional metal collector, the short-circuit current is smaller, less heat is produced, and the temperature rise is lower, which can reduce the probability of the battery experiencing thermal runaway.

For example, with reference to Fig. 1, a structure of the positive electrode current collector 20 is not limited to that shown in Fig. 1. The positive electrode current collector 20 may be made of a metal material such as aluminum foil, which is not limited thereto.

Therefore, with reference to Fig. 1, as for the positive electrode material of the positive electrode plate 01 in the example of the disclosure, by blending the first component having lower thermal stability with the second component having higher thermal stability, and providing the positive electrode current collector 20 including the support layer in the positive electrode plate 01, the short-circuit current of the conductive layer 21 in the positive electrode current collector 20 is smaller, less heat is produced, and the temperature rise is lower, such that the probability of thermal runaway of the battery may be reduced. When the positive electrode plate 01 is used in the battery, a positive electrode thermal runaway temperature of the battery can be positioned above a temperature of an internal short circuit point when mechanical abuse such as puncture occurs etc. The probability of thermal runaway of the battery is reduced. Moreover, the positive electrode material is combined with the positive electrode current collector 20 with a composite current collector structure, and the problem that a large-capacity ternary lithium ion battery used for power and energy storage failed in mechanical abuse such as puncture can be solved advantageously.

For example, with reference to Fig. 1, the first resistance R1 of the positive electrode current collector 20 may be a square resistance of the positive electrode current collector 20. By setting the first resistance R1 to be 20 mΩ-100 mΩ, a current in the battery may be controlled within a reasonable range, so as not to reduce the safety performance of the battery (for example, a cell) when the current is too large, and affect the electrical performance of the battery when the current is too low. For example, a square resistance test method of the first resistance R1 may refer to GBT 1552-1995, which is not limited thereto.

For example, with reference to Fig. 1, the first resistance R1 of the positive electrode current collector 20 may be 40 mΩ-60 mΩ, so as to better control the current in the battery, such that the battery has desirable electrical performance and high safety.

Fig. 2 is a schematic structural diagram of another positive electrode plate according to an example of the disclosure.

For example, with reference to Fig. 2, the positive electrode plate 02 includes a positive electrode material 30, a coating 31, and a positive electrode current collector 32. The positive electrode material 30 is arranged on at least one side of the positive electrode current collector 32. In Fig. 2, the positive electrode material 30 is arranged on two sides of the positive electrode current collector 32 separately. The coating 31 is arranged between the positive electrode material 30 and the positive electrode current collector 32. The coating 31 has a second resistance R2. The second resistance R2 satisfies: $20\,\text{m}\Omega \leq R2 \leq 1000\,\text{m}\Omega$, and a thickness H of the coating satisfies: $0.5\,\mu\text{m} \leq H \leq 5\,\mu\text{m}$. For example, with reference to Fig. 2, the coating 31 may serve as a safety coating of the positive electrode plate 02 to protect a surface of the positive electrode current collector 32. For example, the coating 31 may increase the resistance between the positive electrode current collector 32 and the negative electrode in the battery, so as to reduce a current and heat generation when the positive electrode current collector 32 and the negative electrode are internally short-circuited, and further to reduce the temperature rise. Therefore, when mechanical abuse such as puncture occurs in the battery, the coating 31 can control a temperature of the short circuit point of the battery to be less than the thermal runaway temperature of the positive electrode material 30 when the negative electrode of the battery makes contact with the positive electrode current collector 32, so as to prevent thermal runaway of the battery.

For example, with reference to Fig. 2, the thickness of the coating 31 may satisfy $1\ \mu m \leq H \leq 3\ \mu m$, such that the resistance between the positive electrode current collector 32 and the negative electrode in the battery can be conveniently controlled, and controlling the temperature at the short circuit point of the battery below the thermal runaway temperature of the positive electrode material 30, such that thermal runaway of the battery is prevented.

For example, with reference to Fig. 2, the second resistance of the coating 31 may satisfy $10\ m\Omega \leq R2 \leq 300\ m\Omega$, such that controlling the temperature at the short circuit point of the battery below the thermal runaway temperature of the positive electrode material 30, and the probability of thermal runaway of the battery is reduced.

For example, the positive electrode current collector 32 may be different from the composite current collector in the above examples. For example, the positive electrode current collector 32 may be made of a metal material such as aluminum foil, which is not limited thereto.

For example, the material of the coating includes an inorganic material, a conductive agent, and a binder, which is not limited thereto.

For example, the inorganic material may include at least one of lithium iron phosphate, lithium iron manganese phosphate, lithium vanadium phosphate, lithium vanadyl phosphate, a lithium-rich manganese base material, lithium nickel cobalt aluminate and lithium titanate, which is not limited thereto. For example, the conductive agent may include at least one of carbon black, carbon fiber, carbon nanotubes, graphite, graphene, metal powder, a conductive polymer and conductive ceramic powder, which is not limited thereto. For example, the binder may include at least one of polyvinylidene fluoride, a vinylidene fluoride-hexafluoropropylene copolymer, polyamide, polyacrylonitrile, polyacrylic ester, polyacrylic acid, polyacrylate, sodium carboxymethyl cellulose and lithium carboxymethyl cellulose, which is not limited thereto.

For example, selection of the inorganic material may be determined according to actual design requirements, so as to effectively control temperatures of short circuit points of different batteries and improve thermal stability, which is not limited in the examples of the disclosure.

Some examples of the disclosure further provide a battery. The battery includes the positive electrode plate according to any one of the above examples. For example, the battery provided in the example of the disclosure may be a lithium ion battery, which is not limited thereto. For example, in the battery provided in the example of the disclosure, the positive electrode plate may be the positive electrode plate 01 or the positive electrode plate 02 in the above examples. For the composition parameters of the positive electrode plate in this battery, please refer to the above relevant description, and will not be repeated herein.

According to the battery provided in the example in the disclosure, by blending the second component with higher thermal stability in the first component with lower thermal stability, the positive electrode plate can have high energy density and improved thermal stability, so as to reduce the probability of thermal runaway and have high safety performance.

The example of the disclosure further provides a device. The device includes the battery provided in any one of the above examples. The battery is configured to serve as a power source of the device.

For example, the device provided in the example of the disclosure may be an automobile, such as an electric vehicle. For example, the electric vehicle may be any one of an electric pure electric vehicle, a hybrid electric vehicle, and a plug-in hybrid electric vehicle, which is not limited thereto. For example, the electric vehicle may be any one of an electric bus, an electric tram, an electric bicycle, an electric motorcycle, an electric scooter, an electric golf cart, and an electric truck, which is not limited thereto. For example, the device provided in the example of the disclosure may also be any one of an electric ship, an electric tool, an electronic device, and an energy storage system, which is not limited thereto.

According to the device provided in the example in the disclosure, as for the battery arranged in the device, by blending the second component with higher thermal stability in the first component with lower thermal stability, the positive electrode plate can have high energy density and improved thermal stability, so as to reduce the probability of thermal runaway and have high safety performance. A battery with a large capacity can be conveniently obtained.

At least one example of the disclosure further provides a manufacturing method for a positive electrode plate of a battery. The manufacturing method includes: form a positive electrode material layer containing a positive electrode material.

The step of forming a positive electrode material layer containing a positive electrode material includes: blend a second component in a first component to prepare the positive electrode material. In this case, thermal stability of the first component is lower than that of the second component, the positive electrode material satisfies:

$$\tau = T1 * (8 - lgCap)/(2256 * w)$$

w is a mass ratio of the first component to the positive electrode material layer, T1 is a temperature of the first component at an exothermic peak in a differential scanning calorimetry characterization, a unit of T1 is °C, Cap is a capacity of the battery, a unit of Cap is A·h, and τ is a characteristic ratio of the positive electrode material.

When the positive electrode plate is manufactured, it should be satisfied that: $0.8 \leq \tau \leq 1.5$.

The positive electrode plate manufactured through the above method can obtain a battery with a large capacity and reduce the probability of thermal runaway when the battery is mechanically abused.

When the positive electrode material layer of the positive electrode plate is manufactured, by reasonably selecting the first component and the second component, the first component with lower thermal stability is mixed with the second component with higher thermal stability, such that the occurrence of heat generation, oxygen release, etc. of the battery and the probability of thermal runaway when the battery is mechanically abused can be reduced. Moreover, the positive electrode material can also be applied to scenes with large capacity requirements, for example, the positive electrode material can be applied to lithium ion batteries with a capacity greater than 10 A·h for power or energy storage, to satisfy larger battery capacity requirements. For example, the capacity of the battery is greater than or equal to 100 A·h. For further example, the capacity of the battery is greater than or equal to 100 A·h and less than or equal to 115 A·h, which is not limited thereto.

The positive electrode plate manufactured through the method can allow the battery to have high safety performance and satisfy large capacity requirements, such that the battery has great application potential.

For example, in some examples of the disclosure, when the positive electrode material layer of the positive electrode plate is manufactured, in a case that the capacity of the battery is determined, the positive electrode material may satisfy: $0.85 \leq \tau \leq 1.2$ by adjusting the capacity of the battery, and the components and content of the positive electrode material. Therefore, the battery using the positive electrode material may have desirable safety performance and a large capacity.

For example, in some examples of the disclosure, when the positive electrode material layer of the positive electrode plate is manufactured, the positive electrode material may satisfy: $0.9 \leq \tau \leq 1.1$ by adjusting the capacity of the battery, and the contents of the first component and the second component of the positive electrode material. Therefore, the battery using the positive electrode material may have better safety performance and a larger capacity.

For example, in some examples of the disclosure, when the positive electrode material layer of the positive electrode plate is manufactured, the temperature of the first component at the exothermic peak in the differential scanning calorimetry characterization may be less than or equal to 306°C, and a temperature of the second component at an exothermic peak in the differential scanning calorimetry characterization may be greater than 306°C, which are not limited thereto. By taking the exothermic peak temperature of 306°C as a boundary in the differential scanning calorimetry characterization, the two components in the positive electrode material can be distinguished, such that selection and content obtaining of the components of the positive electrode material can be conveniently implemented.

For example, when the thermal stability of the first component is lower than that of the second component, a thermal effect produced by the first component per unit time is higher than that produced by the second component per unit time. For example, a boundary of the temperature of the first component and the second component at the exothermic peak may be 306°C. Thus, by blending the second component with the first component, the thermal stability of the positive electrode material of the positive electrode plate 01 can be improved, such that the battery has high safety. For characteristics and an obtaining method of the temperature of each component at the exothermic peak in the differential scanning calorimetry characterization, reference may be made to the relevant descriptions in the above examples, which is not repeated herein.

For example, in some examples of the disclosure, when the positive electrode material layer of the positive electrode plate is manufactured, the gram capacity of the first component of the positive electrode material may be greater than or equal to 150 mA h/g, and the gram capacity of the second component may be less than 150 mA h/g, which are not limited thereto. By further limiting a gram capacity of the positive electrode active material component and further screening the positive electrode active material, the boundary between the first component and the second component is made clearer. Reference may be made for a determination method for the gram capacity of each component to the relevant description in the above examples, which is not repeated herein.

For example, when the positive electrode material layer of the positive electrode plate is manufactured, the energy density of the first component may be greater than that of the second component. A boundary of the gram capacity of the first component and the second component is 150 mA h/g. Thus, by blending the first component with the second component, the entire energy density of the positive electrode material of the positive electrode plate 01 can be improved, such that the battery has high energy density.

For example, in some examples of the disclosure, the manufacturing method for the positive electrode plate may further include the following steps.

Step (1). Coat at least one side of a positive electrode current collector with a coating material.

Step (2). Arrange a positive electrode material layer on a side of the coating material away from the positive electrode current collector, and perform drying.

Step (3). Cold press a dried positive electrode plate.

Step (4). Cut the cold-pressed positive electrode plate to a specified size.

For example, the specific characteristic parameters of the coating material can be referred to the relevant description in the above example, which is not repeated herein. The coating formed by the coating material can control a temperature of the short circuit point of the battery to be lower than the thermal runaway temperature of the positive electrode material when the negative electrode of the battery makes contact with the positive electrode current collector, so as to prevent thermal runaway of the battery.

For example, the battery provided in at least one example of the disclosure may further include a negative electrode and an electrolyte. A manufacturing process of the battery may include the following steps.

(1) Manufacture of positive electrode plate

For example, a manufacturing method for the positive electrode plate in the battery may be refer to the relevant description in the above example, which is not repeated herein. The positive electrode plate is manufactured according to a structure of the positive electrode plate in sequence. When the positive electrode plate is provided with no coating, a step of preparing the coating is omitted. In a case that the positive electrode current collector of the positive electrode plate does not use a composite structure, the positive electrode current collector of the composite structure is replaced with a positive electrode current collector of a corresponding structure.

(2) Manufacture of negative electrode plate

For example, the negative electrode plate in the battery may include a negative electrode current collector, a negative electrode material layer, and a negative electrode coating. For example, the negative electrode coating may be arranged on at least one side of the plate current collector, and the negative electrode material layer may be arranged on a side of the negative electrode coating away from the negative electrode current collector. For example, the negative electrode material layer may include a negative electrode material. For example, the negative electrode material may include negative electrode active substances, and components of the negative electrode active substances are not particularly limited. For example, the negative electrode active substances may include at least one of artificial graphite, natural graphite, soft carbon, hard carbon, mesophase carbon microspheres, silicon-based materials, tin-based materials, lithium titanate. For example, the negative electrode coating may include a conductive agent and a binder, which is not limited thereto. For example, the negative electrode current collector may include copper foil, which is not limited thereto, and may be selected according to actual requirements.

(3) Preparation of electrolyte

For example, the electrolyte in the battery may include a lithium salt and an organic solvent, which is not limited thereto. For example, the lithium salt may include at least one of lithium hexafluorophosphate, lithium tetrafluoroborate, and lithium perchlorate. For example, the organic solvent may include at least one of cyclic carbonate, chain carbonate, and carboxylic acid ester. For example, the electrolyte may further contain a functional additive, for example, vinylene carbonate, vinyl sulfate, propane sultone, fluoroethylene carbonate, etc., and at least one example of the disclosure does not limit the material of the electrolyte.

(4) Manufacture of separator layer

For example, the separator layer of the battery may include a polyethylene film, which is not limited thereto.

(5) Package of battery

For example, when the battery is packaged, the positive electrode plate, the separator layer, and the negative electrode may be stacked in sequence, and the separator layer may be located between the positive electrode plate and the negative electrode plate. Then, the stacked structure can be wound to obtain a bare cell. Next, the bare cell is placed in an outer package case of the battery, dried, and then injected with the electrolyte. Finally, after vacuum packaging, standing, formation, shaping and other procedures, the battery is obtained.

The battery provided in at least one example of the disclosure is described below by way of an example.

For example, during a battery performance test, the first component of the positive electrode material in the positive electrode plate 01 of the battery is a ternary material, and the second component is lithium iron phosphate. For example, the first component may be a ternary material having a different nickel content. For example, a first component (ternary material) having a thermal runaway temperature of 264°C has a nickel content of 60%; for example, a first component (ternary material) having a thermal runaway temperature of 298°C has a nickel content of 33%; and a first component (ternary material) having a thermal runaway temperature of 225°C has a nickel content of 80%. During the battery performance test, the first resistance R1 of the positive electrode current collector of the used battery is 50 mΩ.

For example, the negative electrode material in the negative electrode of the battery includes a graphite material (for example, artificial graphite or natural graphite). For example, the capacity of the battery may include 100 A·h and 115 A·h separately. Then, a puncture test is performed on the battery including the positive electrode plate 01 configured as described above.

For example, a puncture test method may include: after the battery is fully charged in a constant current-constant voltage (CC-CV) manner, use a Φ 5 mm high temperature resistant steel needle at a speed of 25 ± 5 mm/s to penetrate from a direction perpendicular to a battery plate (for example, the positive electrode plate 01), and make the steel needle stay in the battery for 1 h. The resistance of the positive electrode current collector is 50 mΩ, and the capacity of the battery is 100 A·h or 115 A·h. For example, the puncture test method can refer to GB/T 31486-2015, which is not limited to this.

Example 1

In a positive electrode plate provided in Example 1, a first component is a ternary material with a nickel content of 60%, and a second component is lithium iron phosphate. A mass ratio w of the first component to a positive electrode material layer is 0.70, a temperature of the first component at an exothermic peak in differential scanning calorimetry characterization is 264°C, a capacity of the battery is 100 A·h, a characteristic ratio $\tau$ of a positive electrode material of the positive electrode plate of the battery is 1.003, and energy density of the battery is 218 Wh/kg. A puncture result for the battery is 10/10p, that is, 10 test results are qualified in 10 puncture tests.

Example 2

In a positive electrode plate provided in Example 2, a first component is a ternary material with a nickel content of 60%, and a second component is lithium iron phosphate. A mass ratio w of the first component to a positive electrode material layer is 0.78, a temperature of the first component at an exothermic peak in differential scanning calorimetry characterization is 264°C, a capacity of the battery is 100 A·h, a characteristic ratio $\tau$ of a positive electrode material of the positive electrode plate of the battery is 0.900, and energy density of the battery is 223 Wh/kg. A puncture result for the battery is 9/10p, that is, 9 test results are qualified in 10 puncture tests.

Example 3

In a positive electrode plate provided in Example 3, a first component is a ternary material with a nickel content of 60%, and a second component is lithium iron phosphate. A mass ratio w of the first component to a positive electrode material layer is 0.64, a temperature of the first component at an exothermic peak in differential scanning calorimetry characterization is 264°C, a capacity of the battery is 100 A·h, a characteristic ratio $\tau$ of a positive electrode material of the positive electrode plate of the battery is 1.097, and energy density of the battery is 213 Wh/kg. A puncture result for the battery is 10/10p, that is, 10 test results are qualified in 10 puncture tests.

Example 4

In a positive electrode plate provided in Example 4, a first component is a ternary material with a nickel content of 60%, and a second component is lithium iron phosphate. A mass ratio w of the first component to a positive electrode material layer is 0.82, a temperature of the first component at an exothermic peak in differential scanning calorimetry characterization is 264°C, a capacity of the battery is 100 A·h, a characteristic ratio $\tau$ of a positive electrode material of the positive electrode plate of the battery is 0.856, and energy density of the battery is 226 Wh/kg. A puncture result for the battery is 8/10p, that is, 10 test results are qualified in 10 puncture tests.

Example 5

In **a** positive electrode plate provided in Example 5, a first component is a ternary material with a nickel content of 60%, and a second component is lithium iron phosphate. A mass ratio w of the first component to a positive electrode material layer is 0.59, a temperature of the first component at an exothermic peak in differential scanning calorimetry characterization is 264°C, a capacity of the battery is 100 A·h, a characteristic ratio $\tau$ of a positive electrode material of the positive electrode plate of the battery is 1.190, and energy density of the battery is 210 Wh/kg. A puncture result for the battery is 10/10p, that is, 10 test results are qualified in 10 puncture tests.

Example 6

In a positive electrode plate provided in Example 6, a first component is a ternary material with a nickel content of 60%, and a second component is lithium iron phosphate. A mass ratio w of the first component to a positive electrode material layer is 0.87, a temperature of the first component at an exothermic peak in differential scanning calorimetry characterization is 264°C, a capacity of the battery is 100 A·h, a characteristic ratio $\tau$ of a positive electrode material of the positive electrode plate of the battery is 0.807, and energy density of the battery is 229 Wh/kg. A puncture result for the battery is 7/10p, that is, 7 test results are qualified in 10 puncture tests.

Example 7

In a positive electrode plate provided in Example 7, a first component is a ternary material with a nickel content of 60%, and a second component is lithium iron phosphate. A mass ratio w of the first component to a positive electrode material layer is 0.47, a temperature of the first component at an exothermic peak in differential scanning calorimetry characterization is 264°C, a capacity of the battery is 100 A·h, a characteristic ratio $\tau$ of a positive electrode material of the positive electrode plate of the battery is 1.494, and energy density of the battery is 201 Wh/kg. A puncture result for the battery is 10/10p, that is, 10 test results are qualified in 10 puncture tests.

Example 8

In a positive electrode plate provided in Example 8, a first component is a ternary material with a nickel content of 33%, and a second component is lithium iron phosphate. A mass ratio w of the first component to a positive electrode material layer is 0.78, a temperature of the first component at an exothermic peak in differential scanning calorimetry characterization is 298°C, a capacity of the battery is 100 A·h, a characteristic ratio $\tau$ of a positive electrode material of the positive electrode plate of the battery is 1.016, and energy density of the battery is 223 Wh/kg. A puncture result for the battery is 10/10p, that is, 10 test results are qualified in 10 puncture tests.

Example 9

In **a** positive electrode plate provided in Example 9, a first component is a ternary material with a nickel content of 80%, and a second component is lithium iron phosphate. A mass ratio w of the first component to a positive electrode material layer is 0.58, a temperature of the first component at an exothermic peak in differential scanning calorimetry characterization is 225°C, a capacity of the battery is 100 A·h, a characteristic ratio $\tau$ of a positive electrode material of the positive electrode plate of the battery is 1.032, and energy density of the battery is 209 Wh/kg. A puncture result for the battery is 10/10p, that is, 10 test results are qualified in 10 puncture tests.

Example 10

In a positive electrode plate provided in Example 10, a first component is a ternary material with a nickel content of 33%, and a second component is lithium iron phosphate. A mass ratio w of the first component to a positive electrode material layer is 0.73, a temperature of the first component at an exothermic peak in differential scanning calorimetry characterization is 298°C, a capacity of the battery is 115 A·h, a characteristic ratio $\tau$ of a positive electrode material of the positive electrode plate of the battery is 1.075, and energy density of the battery is 223 Wh/kg. A puncture result for the battery is 10/10p, that is, 10 test results are qualified in 10 puncture tests.

Example 11

In a positive electrode plate provided in Example 11, a first component is a ternary material with a nickel content of 60%, and a second component is lithium iron phosphate. A mass ratio w of the first component to a positive electrode material layer is 0.95, a temperature of the first component at an exothermic peak in differential scanning calorimetry characterization is 264°C, a capacity of the battery is 100 A·h, a characteristic ratio $\tau$ of a positive electrode material of the positive electrode plate of the battery is 0.739, and energy density of the battery is 235 Wh/kg. A puncture result for the battery is 0/10p, that is, 10 test results are unqualified in 10 puncture tests.

Example 12

In a positive electrode plate provided in Example 12, a first component is a ternary material with a nickel content of 60%, and a second component is lithium iron phosphate. A mass ratio w of the first component to a positive electrode material layer is 0.35, a temperature of the first component at an exothermic peak in differential scanning calorimetry characterization is 264°C, a capacity of the battery is 100 A·h, a characteristic ratio $\tau$ of a positive electrode material of the positive electrode plate of the battery is 2.006, and energy density of the battery is 193 Wh/kg. A puncture result for the battery is 10/10p, that is, 10 test results are qualified in 10 puncture tests. Table 1 shows Examples 1-12 and corresponding parameters and test results.

Table 1: Result of puncture test for battery including positive electrode plate 01

| Sequence number | T (°C) | Cap (A·h) | w | $\tau$ | Energy density (Wh/kg) | Puncture result |
|---|---|---|---|---|---|---|
| Example 1 | 264 | 100 | 0.70 | 1.003 | 218 | 10/10 p |
| Example 2 | 264 | 100 | 0.78 | 0.900 | 223 | 9/10 p |
| Example 3 | 264 | 100 | 0.64 | 1.097 | 213 | 10/10 p |
| Example 4 | 264 | 100 | 0.82 | 0.856 | 226 | 8/10 p |
| Example 5 | 264 | 100 | 0.59 | 1.190 | 210 | 10/10 p |
| Example 6 | 264 | 100 | 0.87 | 0.807 | 229 | 7/10 p |
| Example 7 | 264 | 100 | 0.47 | 1.494 | 201 | 10/10 p |
| Example 8 | 298 | 100 | 0.78 | 1.016 | 223 | 10/10 p |
| Example 9 | 225 | 100 | 0.58 | 1.032 | 209 | 10/10 p |
| Example 10 | 298 | 115 | 0.73 | 1.075 | 223 | 10/10 p |
| Example 11 | 264 | 100 | 0.95 | 0.739 | 235 | 0/10 p |
| Example 12 | 264 | 100 | 0.35 | 2.006 | 193 | 10/10 p |

For example, as can be seen from Table 1, when the positive electrode material satisfies: $\tau$ = T1 * (8 - lgCap)/(2256 * w), and when $0.8 \leq \tau \leq 1.5$, a probability of the positive electrode material passing the puncture test is at least 70%. When $0.85 \leq \tau \leq 1.2$, the probability of the positive electrode material passing the puncture test is at least 80%. When $0.9 \leq \tau \leq 1.1$, the probability of the positive electrode material passing the puncture test is at least 90%. For example, in the examples of the disclosure, a numerical range satisfied by $\tau$ in the positive electrode material may have a certain fluctuation range, for example, the fluctuation range may be 0.5%-0.1%, which is not limited thereto.

For example, according to Examples 1-7, the energy density of the battery tends to decrease as $\tau$ increases. For example, according to Example 11, when $\tau$ is too low, the result of the puncture test of the battery deteriorates. For example, according to Example 12, when $\tau$ is too high, the energy density of the battery becomes lower. Therefore, in order to make the safety performance of the battery better and the energy density high, $\tau$ needs to fall within a reasonable range.

In the following examples, tests are conducted by using a positive electrode plate 02. When the positive electrode plate 02 is tested, ternary materials with different nickel contents are used as the first component, and lithium iron phosphate is used as the second component. For the temperature at the exothermic peak in the differential scanning calorimetry characterization corresponding to different nickel contents, reference may be made to the relevant description in the above examples, and will not be repeated herein. The positive electrode current collector in the positive electrode plate 02 uses aluminum foil. The coating 31 in the positive electrode plate 02 is made of lithium iron phosphate. The second resistance of the coating 31 is 20 m$\Omega$. The capacity of the battery may include 100 A·h and 115 A·h separately. Then, a puncture test is performed on the battery including the positive electrode plate 02 configured as described above.

Example 13

In a positive electrode plate provided in Example 13, a first component is a ternary material with a nickel content of 60%, and a second component is lithium iron phosphate. A mass ratio w of the first component to a positive electrode material layer is 0.70, a temperature of the first component at an exothermic peak in differential scanning calorimetry characterization is 264°C, a capacity of the battery is 100 A·h, a characteristic ratio $\tau$ of a positive electrode material of the positive electrode plate of the battery is 1.003, and energy density of the battery is 221 Wh/kg. A puncture result for the battery is 10/10p.

Example 14

In a positive electrode plate provided in Example 14, a first component is a ternary material with a nickel content of 60%, and a second component is lithium iron phosphate. A mass ratio w of the first component to a positive electrode material layer is 0.78, a temperature of the first component at an exothermic peak in differential scanning calorimetry characterization is 264°C, a capacity of the battery is 100 A·h, a characteristic ratio $\tau$ of a positive electrode material of the positive electrode plate of the battery is 0.900, and energy density of the battery is 226 Wh/kg. A puncture result for the battery is 8/10p.

Example 15

In a positive electrode plate provided in Example 15, a first component is a ternary material with a nickel content of 60%, and a second component is lithium iron phosphate. A mass ratio w of the first component to a positive electrode material layer is 0.64, a temperature of the first component at an exothermic peak in differential scanning calorimetry characterization is 264°C, a capacity of the battery is 100 A·h, a characteristic ratio $\tau$ of a positive electrode material of the positive electrode plate of the battery is 1.097, and energy density of the battery is 216 Wh/kg. A puncture result for the battery is 10/10p.

Example 16

In a positive electrode plate provided in Example 16, a first component is a ternary material with a nickel content of 60%, and a second component is lithium iron phosphate. A mass ratio w of the first component to a positive electrode material layer is 0.82, a temperature of the first component at an exothermic peak in differential scanning calorimetry characterization is 264°C, a capacity of the battery is 100 A·h, a characteristic ratio $\tau$ of a positive electrode material of the positive electrode plate of the battery is 0.856, and energy density of the battery is 229 Wh/kg. A puncture result for the battery is 7/10p.

Example 17

In a positive electrode plate provided in Example 17, a first component is a ternary material with a nickel content of 60%, and a second component is lithium iron phosphate. A mass ratio w of the first component to a positive electrode material layer is 0.59, a temperature of the first component at an exothermic peak in differential scanning calorimetry characterization is 264°C, a capacity of the battery is 100 A·h, a characteristic ratio $\tau$ of a positive electrode material of the positive electrode plate of the battery is 1.190, and energy density of the battery is 213 Wh/kg. A puncture result for the battery is 10/10p.

Example 18

In a positive electrode plate provided in Example 18, a first component is a ternary material with a nickel content of 60%, and a second component is lithium iron phosphate. A mass ratio w of the first component to a positive electrode material layer is 0.87, a temperature of the first component at an exothermic peak in differential scanning calorimetry characterization is 264°C, a capacity of the battery is 100 A·h, a characteristic ratio $\tau$ of a positive electrode material of the positive electrode plate of the battery is 0.807, and energy density of the battery is 232 Wh/kg. A puncture result for the battery is 6/10p.

Example 19

In a positive electrode plate provided in Example 19, a first component is a ternary material with a nickel content of 60%, and a second component is lithium iron phosphate. A mass ratio w of the first component to a positive electrode material layer is 0.47, a temperature of the first component at an exothermic peak in differential scanning calorimetry characterization is 264°C, a capacity of the battery is 100 A·h, a characteristic ratio $\tau$ of a positive electrode material of the positive electrode of the battery is 1.494, and energy density of the battery is 204 Wh/kg. A puncture result for the battery is 10/10p.

Example 20

In a positive electrode plate provided in Example 20, a first component is a ternary material with a nickel content of 33%, and a second component is lithium iron phosphate. A mass ratio w of the first component to a positive electrode material layer is 0.78, a temperature of the first component at an exothermic peak in differential scanning calorimetry characterization is 298°C, a capacity of the battery is 100 A·h, a characteristic ratio $\tau$ of a positive electrode material of the positive electrode plate of the battery is 1.016, and energy density of the battery is 226 Wh/kg. A puncture result for the battery is 10/10p.

Example 21

In a positive electrode plate provided in Example 21, a first component is a ternary material with a nickel content of 80%, and a second component is lithium iron phosphate. A mass ratio w of the first component to a positive electrode material layer is 0.58, a temperature of the first component at an exothermic peak in differential scanning calorimetry characterization is 225°C, a capacity of the battery is 100 A·h, a characteristic ratio $\tau$ of a positive electrode material of the positive electrode plate of the battery is 1.032, and energy density of the battery is 212 Wh/kg. A puncture result for the battery is 10/10p.

Example 22

In a positive electrode plate provided in Example 22, a first component is a ternary material with a nickel content of 33%, and a second component is lithium iron phosphate. A mass ratio w of the first component to a positive electrode material layer is 0.73, a temperature of the first component at an exothermic peak in differential scanning calorimetry characterization is 298°C, a capacity of the battery is 115 A·h, a characteristic ratio $\tau$ of a positive electrode material of the positive electrode plate of the battery is 1.075, and energy density of the battery is 226 Wh/kg. A puncture result for the battery is 10/10p.

Example 23

In a positive electrode plate provided in Example 23, a first component is a ternary material with a nickel content of 60%, and a second component is lithium iron phosphate. A mass ratio w of the first component to a positive electrode material layer is 0.95, a temperature of the first component at an exothermic peak in differential scanning calorimetry characterization is 264°C, a capacity of the battery is 100 A·h, a characteristic ratio $\tau$ of a positive electrode material of the positive electrode plate of the battery is 0.739, and energy density of the battery is 238 Wh/kg. A puncture result for the battery is 0/10p.

Example 24

In a positive electrode plate provided in Example 24, a first component is a ternary material with a nickel content of 60%, and a second component is lithium iron phosphate. A mass ratio w of the first component to a positive electrode material layer is 0.35, a temperature of the first component at an exothermic peak in differential scanning calorimetry characterization is 264°C, a capacity of the battery is 100 A·h, a characteristic ratio $\tau$ of a positive electrode material of the positive electrode plate of the battery is 2.006, and energy density of the battery is 196 Wh/kg. A puncture result for the battery is 10/10p.

For example, Table 2 shows results of the puncture test for the battery including the positive electrode plate 02.

Table 2: Result of puncture test for battery including positive electrode plate 02

| Sequence number | T (°C) | Cap (A·h) | w | $\tau$ | Energy density (Wh/kg) | Puncture result |
|---|---|---|---|---|---|---|
| Example 13 | 264 | 100 | 0.70 | 1.003 | 221 | 10/10 p |
| Example 14 | 264 | 100 | 0.78 | 0.900 | 226 | 8/10 p |
| Example 15 | 264 | 100 | 0.64 | 1.097 | 216 | 10/10 p |
| Example 16 | 264 | 100 | 0.82 | 0.856 | 229 | 7/10 p |
| Example 17 | 264 | 100 | 0.59 | 1.190 | 213 | 10/10 p |
| Example 18 | 264 | 100 | 0.87 | 0.807 | 232 | 6/10 p |
| Example 19 | 264 | 100 | 0.47 | 1.494 | 204 | 10/10 p |
| Example 20 | 298 | 100 | 0.78 | 1.016 | 226 | 10/10 p |
| Example 21 | 225 | 100 | 0.58 | 1.032 | 212 | 10/10 p |
| Example 22 | 298 | 115 | 0.73 | 1.075 | 226 | 10/10 p |
| Example 23 | 264 | 100 | 0.95 | 0.739 | 238 | 0/10 p |

(continued)

| Sequence number | T (°C) | Cap (A·h) | w | $\tau$ | Energy density (Wh/kg) | Puncture result |
|---|---|---|---|---|---|---|
| Example 24 | 264 | 100 | 0.35 | 2.006 | 196 | 10/10 p |

With reference to Table 2, it can be seen from Examples 13-22 that when $0.8 \leq \tau \leq 1.5$, the battery has a high probability of passing the puncture test. When $1 \leq \tau \leq 1.5$, the probability of the battery passing the puncture test is higher. For example, in Example 23, $\tau$ is less than 0.8, and the battery barely passes the puncture test. For example, in Example 24, $\tau$ is greater than 0.8, and the battery can pass the puncture test, but this will result in a decrease in the energy density of the battery.

Therefore, the coating 31 is provided in the positive electrode plate 02, such that the resistance between the positive electrode current collector and the negative electrode in the battery can increase, so as to reduce a current and heat generation when the positive electrode current collector and the negative electrode are internally short-circuited, and further to reduce the temperature rise. Furthermore, since the positive electrode plate 02 also uses the positive electrode material satisfying requirements, that is, when a characteristic ratio of the positive electrode material is $0.8 \leq \tau \leq 1.5$, the energy density of the battery can be maintained at a high level.

Therefore, the positive electrode plate provided in the examples of the disclosure can allow the battery to have high safety performance and satisfy large capacity requirements, such that the battery has great application potential.

Features in a same example and in different examples of the disclosure can be combined with one another without conflict.

What are described above are merely being particular embodiments of the disclosure, and are not intended to limit the scope of protection of the disclosure, and any changes or substitutions that can readily occur to those skilled in the art within the scope of technology disclosed in the disclosure should fall within the scope of protection of the disclosure. Therefore, the scope of protection of the disclosure shall be subject to the scope of protection of the claims.

**Claims**

1. A positive electrode plate for a battery, comprising: a positive electrode material layer containing a positive electrode material, wherein

   the positive electrode material comprises a first component and a second component, thermal stability of the first component is lower than that of the second component, the positive electrode material satisfies:

   $$\tau = T1 * (8 - \lg Cap)/(2256 * w)$$

   w is a mass ratio of the first component to the positive electrode material layer, T1 is a temperature of the first component at an exothermic peak in a differential scanning calorimetry characterization, a unit of T1 is °C, Cap is a capacity of the battery, a unit of Cap is A h, $\tau$ is a characteristic ratio of the positive electrode material, and

   $$0.8 \leq \tau \leq 1.5.$$

2. The positive electrode plate for a battery according to claim 1, wherein $0.85 \leq \tau \leq 1.2$.

3. The positive electrode plate for a battery according to claim 1, wherein $0.9 \leq \tau \leq 1.1$.

4. The positive electrode plate for a battery according to any one of claims 1-3, wherein the temperature of the first component at the exothermic peak in the differential scanning calorimetry characterization is less than or equal to 306°C, and a temperature of the second component at an exothermic peak in the differential scanning calorimetry characterization is greater than 306°C.

5. The positive electrode plate for a battery according to any one of claims 1-4, wherein a gram capacity of the first component is greater than or equal to 150 mA h/g, and a gram capacity of the second component is less than 150 mA h/g.

6. The positive electrode plate for a battery according to any one of claims 1-5, wherein the first component comprises at least one of a ternary material, lithium cobaltate, lithium nickelate,

the second component comprises at least one of an olivine material, a spinel material and a ternary layered compound with a low nickel content, and a mass percentage of nickel in the ternary layered compound with a low nickel content is 30%-80%.

7. The positive electrode plate for a battery according to claim 6, wherein the olivine material comprises at least one of lithium iron phosphate, lithium iron manganese phosphate, lithium vanadium phosphate, and lithium manganate.

8. The positive electrode plate for a battery according to any one of claims 1-7, further comprising a positive electrode current collector, wherein at least one side of the positive electrode current collector is provided with the positive electrode material layer.

9. The positive electrode plate for a battery according to claim 8, wherein the positive electrode current collector is a composite current collector, the positive electrode current collector has a first resistance R1, and the first resistance R1 satisfies: $20\ m\Omega \le R1 \le 100\ m\Omega$.

10. The positive electrode plate for a battery according to claim 8 or 9, further comprising a coating, wherein the coating is located between the positive electrode material layer and the positive electrode current collector, and the coating has a second resistance R2, wherein

the second resistance R2 satisfies: $20\ m\Omega \le R2 \le 1000\ m\Omega$, and a thickness H of the coating satisfies: $0.5\ \mu m \le H \le 5\ \mu m$.

11. The positive electrode plate for a battery according to claim 10, wherein the thickness H of the coating satisfies: $1\ \mu m \le H \le 3\ \mu m$.

12. The positive electrode plate for a battery according to claim 10 or 11, wherein the second resistance R2 of the coating satisfies: $10\ m\Omega \le R2 \le 300\ m\Omega$.

13. The positive electrode plate for a battery according to any one of claims 10-12, wherein the coating material comprises an inorganic material, a conductive agent, and a binder, wherein

the inorganic material comprises at least one of lithium iron phosphate, lithium iron manganese phosphate, lithium vanadium phosphate, lithium vanadyl phosphate, a lithium-rich manganese base material, lithium nickel cobalt aluminate and lithium titanate;
the conductive agent comprises at least one of carbon black, carbon fiber, carbon nanotubes, graphite, graphene, metal powder, a conductive polymer and conductive ceramic powder; and
the binder comprises at least one of polyvinylidene fluoride, a vinylidene fluoride-hexafluoropropylene copolymer, polyamide, polyacrylonitrile, polyacrylic ester, polyacrylic acid, polyacrylate, sodium carboxymethyl cellulose and lithium carboxymethyl cellulose.

14. The positive electrode plate for a battery according to any one of claims 1-13, wherein a capacity of the battery is greater than 10 A h.

15. The positive electrode plate for a battery according to any one of claims 1-14, wherein the capacity of the battery is greater than or equal to 100A h.

16. The positive electrode plate for a battery according to any one of claims 1-15, wherein the capacity of the battery is greater than or equal to 100 A h and less than or equal to 115 A h.

17. A battery, comprising the positive electrode plate according to any one of claims 1-16.

18. A device, comprising the battery according to claim 17, wherein the battery is configured to serve as a power source of the device.

19. A manufacturing method for a positive electrode plate of a battery, comprising: forming a positive electrode material layer containing a positive electrode material, wherein
the forming a positive electrode material layer containing a positive electrode material comprises:

blending a second component in a first component to prepare the positive electrode material, wherein thermal stability of the first component is lower than that of the second component, the positive electrode material satisfies:

$$\tau = T1 * (8 - \lg Cap)/(2256 * w)$$

w is a mass ratio of the first component to the positive electrode material layer, T1 is a temperature of the first component at an exothermic peak in a differential scanning calorimetry characterization, a unit of T1 is °C, Cap is a capacity of the battery, a unit of Cap is A h, $\tau$ is a characteristic ratio of the positive electrode material, and

$$0.8 \leq \tau \leq 1.5.$$

20. The manufacturing method according to claim 19, wherein $0.85 \leq \tau \leq 1.2$.

21. The manufacturing method according to claim 19 or 20, wherein $0.9 \leq \tau \leq 1.1$.

22. The manufacturing method according to any one of claims 19-21, wherein the temperature of the first component at the exothermic peak in the differential scanning calorimetry characterization is less than or equal to 306°C, and a temperature of the second component at an exothermic peak in the differential scanning calorimetry characterization is greater than 306°C.

23. The manufacturing method according to any one of claims 19-22, wherein a gram capacity of the first component is greater than or equal to 150 mA h/g, and a gram capacity of the second component is less than 150 mA h/g.

01

10

21
22  } 20
21

10

Fig. 1

02

30

31

32

31

30

Fig. 2

<table>
<tr><td colspan="2">**INTERNATIONAL SEARCH REPORT**</td><td colspan="2">International application No.<br>**PCT/CN2023/132181**</td></tr>
</table>

**A.    CLASSIFICATION OF SUBJECT MATTER**

H01M4/13(2010.01)i；  H01M4/139(2010.01)i；  H01M10/0525(2010.01)n

According to International Patent Classification (IPC) or to both national classification and IPC

**B.    FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNABS; CNTXT; CNKI; VEN; ENTXT; IEEE: 正极, 正电极, 阴极, 材料, 混合, 复合, 第一, 第二, 三元, 镍, 钴, 锰, NCM, 钴酸锂, 锂钴氧, 镍酸锂, 锂镍氧, 橄榄石, 尖晶石, 锰酸锂, 磷酸铁锂, 磷酸亚铁锂, 锂铁磷酸盐, 锰酸锂, 锂锰氧, 差示扫描量热, DSC, 峰, 温度, 容量, 安时, Ah, positive, electrode, cathode, material, mix, composite, first, second, ternary, Nickel, Cobalt, Manganese, Lithium, oxide, iron, phosphate, differential, scanning, calorimetry, peak, temperature, capacity

**C.    DOCUMENTS CONSIDERED TO BE RELEVANT**

| Category* | Citation of document, with indication, where appropriate, of the relevant passages | Relevant to claim No. |
|---|---|---|
| PX | CN 116504912 A (SHANGHAI LANJUN NEW ENERGY TECHNOLOGY CO., LTD.) 28 July 2023 (2023-07-28)<br>    claims 1-23 | 1-23 |
| X | KR 20160001024 A (LG CHEMICAL LTD.) 06 January 2016 (2016-01-06)<br>    description, paragraphs 0003-0057 | 1-9, 14-23 |
| Y | KR 20160001024 A (LG CHEMICAL LTD.) 06 January 2016 (2016-01-06)<br>    description, paragraphs 0003-0057 | 10-13 |
| Y | CN 111200110 A (NINGDE CONTEMPORARY AMPEREX TECHNOLOGY CO., LTD.) 26 May 2020 (2020-05-26)<br>    description, paragraphs 0013-0057 | 10-13 |
| Y | CN 109755465 A (NINGDE CONTEMPORARY AMPEREX TECHNOLOGY CO., LTD.) 14 May 2019 (2019-05-14)<br>    description, paragraphs 0015-0049 | 10-13 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 January 2024** | **25 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/132181**

**C.   DOCUMENTS CONSIDERED TO BE RELEVANT**

| Category* | Citation of document, with indication, where appropriate, of the relevant passages | Relevant to claim No. |
|---|---|---|
| Y | CN 111200132 A (NINGDE CONTEMPORARY AMPEREX TECHNOLOGY CO., LTD.) 26 May 2020 (2020-05-26)<br>    description, paragraphs 0011-0076 | 10-13 |
| A | CN 111834632 A (ZIGONG XINZHOU INDUSTRIAL CO., LTD.) 27 October 2020 (2020-10-27)<br>    entire document | 1-23 |

Form PCT/ISA/210 (second sheet) (July 2022)

INTERNATIONAL SEARCH REPORT
Information on patent family members

International application No.

**PCT/CN2023/132181**

| Patent document cited in search report | | | Publication date (day/month/year) | Patent family member(s) | | | Publication date (day/month/year) |
|---|---|---|---|---|---|---|---|
| CN | 116504912 | A | 28 July 2023 | None | | | |
| KR | 20160001024 | A | 06 January 2016 | None | | | |
| CN | 111200110 | A | 26 May 2020 | WO | 2020098788 | A1 | 22 May 2020 |
| | | | | US | 2021367280 | A1 | 25 November 2021 |
| | | | | PT | 3787069 | T | 28 November 2022 |
| | | | | ES | 2931467 | T3 | 29 December 2022 |
| | | | | EP | 3787069 | A1 | 03 March 2021 |
| | | | | EP | 3787069 | A4 | 21 July 2021 |
| | | | | EP | 3787069 | B1 | 26 October 2022 |
| CN | 109755465 | A | 14 May 2019 | CN | 109755465 | B | 29 December 2020 |
| CN | 111200132 | A | 26 May 2020 | WO | 2020098783 | A1 | 22 May 2020 |
| | | | | EP | 3654422 | A1 | 20 May 2020 |
| | | | | EP | 3654422 | B1 | 25 August 2021 |
| | | | | US | 2020161631 | A1 | 21 May 2020 |
| | | | | US | 11664486 | B2 | 30 May 2023 |
| | | | | CN | 111200132 | B | 18 May 2021 |
| CN | 111834632 | A | 27 October 2020 | None | | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211504705